# EUROPÄISCHE PATENTSCHRIFT

(11) **EP 2 512 900 B1**
(45) Veröffentlichungstag und Bekanntmachung des Hinweises auf die Patenterteilung: **16.04.2014**
(21) Anmeldenummer: 10835274.1
(22) Anmeldetag: 14.12.2010
(51) Int. Cl.: F16F 1/12, B62D 1/184, B62D 1/19

(54) **VERSTELLBARE SICHERHEITS-LENKSÄULE**
ADJUSTABLE SAFETY STEERING COLUMN
COLONNE DE DIRECTION DE SÉCURITÉ RÉGLABLE

(30) Priorität: 16.12.2009 DE 102009058686
(43) Veröffentlichungstag der Anmeldung: 24.10.2012
(73) Patentinhaber: Brose Fahrzeugteile GmbH & Co. KG, 96450 Coburg (DE)
(72) Erfinder: LÖFFLER, Linda, 96332 Pressig (DE); HEINZE, Sebastian, 98678 Sachsenbrunn (DE); SAXSTETTER, Christian, 96487 Dörfles-Esbach (DE)
(74) Vertreter: 2K Patentanwälte Blasberg Kewitz & Reichel
(86) Internationale Anmeldenummer: PCT/EP2010/007613
(87) Internationale Veröffentlichungsnummer: WO 2011/116808

(56) Entgegenhaltungen:
- DE-A1- 1 605 885
- DE-A1- 3 438 918
- DE-A1-102008 036 547

## Beschreibung

Die Erfindung betrifft eine verstellbare Sicherheits-Lenksäule nach dem Oberbegriff des Anspruchs 1 sowie eine dafür vorgesehene Klemmvorrichtung zur Verstellung der Lenksäule nach dem Oberbegriff des nebengeordneten Anspruchs. Insbesondere betrifft die Erfindung eine Sicherheits-Lenksäule sowie eine Klemmvorrichtung, die eine einfache Verstellung der Lenksäulenposition zumindest in axialer Richtung ermöglichen und eine Crashfunktion bereitstellen.

Aus dem Stand der Technik sind Sicherheits-Lenksäulen bekannt, bei denen üblicherweise zum Verstellen der Lenksäulenposition mindestens eine Klemmvorrichtung eingesetzt wird.

Die DE 10 2008 036 548 beschreibt eine Lenksäule, die sowohl in ihrer Länge wie auch in ihrer Neigung mittels jeweils einer Klemmvorrichtung verstellt werden kann. Jede Klemmvorrichtung weist ein elastisches Element, vorzugsweise in Form einer Schenkelfeder oder Schlingfeder, auf, die durch Aufbringen einer Kraft aufgeweitet werden kann, im Normalzustand aber verengt ist, um eine Klemmkraft auf ein durch die Schenkelfeder geführtes Bauteil auszuüben. Beispielsweise weist die zur Längenverstellung und -fixierung vorgesehene Klemmvorrichtung eine Schenkelfeder auf, die auf ein Aufnahmerohr bzw. Hüllrohr für eine Lenkspindel wirkt und das Hüllrohr in der gewünschten Position verklemmt. Durch Aufweiten der Schenkelfeder kann die Verklemmung gelöst und die Position des Hüllrohres sowie der darin gelagerten Lenkspindel und somit die Länge der Lenksäule leicht verstellt werden. Das Aufweiten der Schenkelfeder kann durch einen elektromotorisch betriebenen Mechanismus erfolgen. Dabei muss der Elektromotor nur zum Aufweiten der jeweiligen Schenkelfeder aktiviert werden; im Verklemmungsfall ist keine Aktivierung bzw. Bestromung des Motors erforderlich. Auch für die Neigungsverstellung ist eine solche Klemmvorrichtung vorgesehen. Demnach kann durch die dort vorgeschlagene Konstruktion bereits mit zwei Schenkelfedern bzw. Schlingfedern, auch Porter-Federn genannt, ein schnell und leicht zu bedienender Mechanismus zur Verstellung der Lenksäule realisiert werden. Eine Crashfunktion ist insofern auch bereits vorhanden, da im Falle eines Auffahrunfalls und der damit einhergehenden Verschiebung des Hüllrohres bzw. der Lenkspindel zumindest die für die Längsfixierung vorgesehene Klemmvorrichtung nachgeben würde, so dass die das Hüllrohr bzw. die Lenkspindel tiefer in die Aufnahmehalterung hineinrutschen könnte. Wünschenswert wäre es eine verstellbare Lenksäule mit Crashfunktion zu haben, die ein definiertes und somit sicheres Rutschverhalten im Falle eines Aufpralls des Fahrzeuges ermöglicht.

Die Offenlegungsschrift DE 1 605 885 beschreibt eine Sicherheits-Lenksäule, bei der eine Schenkel- bzw. Wickelfeder vorgesehen ist, die ein Lenküberrohr bzw. ein Hüllrohr für eine Lenkspindel reibschlüssig umfasst, so dass im Aufprallfall eine durch Reibung abgebremste Verschiebung auftritt. Für den normalen Fahrbetrieb kann die Schenkelfeder durch einen manuell bedienbaren Mechanismus aufgeweitet werden, um die Länge der Lenksäule einzustellen. Demnach wird sowohl die Arretierungsfunktion wie auch die Crashfunktion im wesentlichen durch die Klemmkraft der Schenkelfeder bestimmt, wobei für die Arretierungsfunktion die Haftreibung und für die Crashfunktion die nach Überwindung der Haftreibung auftretende Gleitreibung zu beachten ist. Letztere kann durchaus deutlich geringer sein und somit dazu führen, dass keine ausreichende Bremswirkung (Aufpralldämpfung) erzielbar ist. Dies ist insbesondere in modernen Fahrzeugen von Bedeutung, da diese zumeist auch einen Airbag aufweisen, der in dem Lenkhandrad verbaut ist und im Aufprallfall aktiviert wird.

Daher ist es Aufgabe der Erfindung, eine verstellbare Sicherheits-Lenksäule vorzuschlagen, die die Nachteile der eingangs genannten Lösungen überwindet. Insbesondere soll eine verstellbare Sicherheits-Lenksäule vorgeschlagen werden, die ohne Einbußen bezüglich ihrer Verstellbarkeit auch eine definierbare und sichere Crashfunktion aufweist.

Gelöst wird die Aufgabe durch eine verstellbare Sicherheits-Lenksäule mit den Merkmalen des Anspruchs 1 sowie durch eine dafür vorgesehene Klemmvorrichtung mit den Merkmalen des nebengeordneten Anspruchs.

Demnach wird eine verstellbare Sicherheits-Lenksäule mit mindestens einer Klemmvorrichtung vorgeschlagen, die zur Längenfixierung der verstellbaren Lenksäule eine Schenkelfeder aufweist, die ein in die Klemmvorrichtung eingeführtes Hüllrohr für die Lenkspindel an einer durch Lösen der Schenkelfeder verstellbaren Position verklemmt, wobei zumindest in Nähe zu einem Ende der Schenkelfeder mindestens ein Anschlagelement angeordnet ist, gegen das die Schenkelfeder bei einer axialen in Einführungsrichtung bzw. zur Aufnahmehalterung hin auftretenden Verschiebung des Hüllrohres anschlägt, wodurch die Wicklung der Schenkelfeder eine begrenzbare Schrägstellung einnimmt.

Dementsprechend wird auch eine Klemmvorrichtung zur Längen-oder Neigungsfixierung einer solchen Lenksäule vorgeschlagen, wobei die Klemmvorrichtung eine Schenkelfeder aufweist, die das Hüllrohr bzw. Lenküberrohr an einer durch Lösen der Schenkelfeder verstellbaren Position verklemmt, wobei zumindest in Nähe zu einem Ende der Schenkelfeder mindestens ein Anschlagelement angeordnet ist, gegen das die Schenkelfeder im Aufprallfall anschlägt, wodurch die Wicklung der Schenkelfeder eine begrenzbare Schrägstellung einnimmt.

Somit wird eine verstellbare Sicherheits-Lenksäule geschaffen, bei der eine Verstell- bzw. Klemmfunktion sowie eine effektive Crash-Sicherheitsfunktion mittels weniger Bauteile realisiert werden können. Durch das Herbeiführen einer begrenzbaren Verschränkung der Schenkelfeder(n) im Aufprallfall wird erreicht, dass aufgrund der damit verbundenen Schrägstellung der Wicklung(en) eine definierte Bremswirkung eintritt, die eine sichere und dimensionierbare Crashfunktion bereitstellt.

Vorzugsweise ist an einem Ende der Schenkelfeder ein erstes Anschlagelement angeordnet und ist an dem anderen Ende der Schenkelfeder ein zweites Anschlagelement angeordnet, wobei die Enden gegen jeweils eines der Anschlagelemente anschlagen, sobald das Hüllrohr eine Verschiebung erfährt. Damit wird erreicht, dass sofort bei Auftreten einer Verschiebung, auch bereits im Normalfall insbesondere aber im Crashfalls, die Schenkelfeder in eine Schrägstellung versetzt wird, so dass die Überwindung der Haftreibung, welche im wesentlichen durch die Klemmkraft der Schenkelfeder in Normalstellung bestimmt wird, erleichtert wird. Das zweite Anschlagelement kann in Umfangsrichtung zum ersten Anschlagelement versetzt angeordnet sein. Dieser Versatz ist nicht zwingend erforderlich, kann aber die Schrägstellung der Wicklung noch weiter erleichtern. Insgesamt wird die Überwindung der Haftreibung, welche im wesentlichen durch die Klemmkraft der Schenkelfeder in Normalstellung bestimmt wird, erleichtert, wobei sich dann eine Gleitreibung ergibt, die im wesentlichen durch die begrenzbare Schrägstellung bzw. Verschränkung der Wicklung bestimmt wird.

Bevorzugt ist in einem vorgebbaren Abstand zu einem der beiden Enden der Schenkelfeder ein (drittes) Anschlagelement bzw. Endanschlagelement angeordnet, gegen das dieses Ende der Schenkelfeder erst dann anschlägt, wenn die Verschiebung der Lenkspindel den vorgebbaren Abstand erreicht oder überschritten hat. Dadurch wird erreicht, dass die Verschränkung nur einen max. zulässigen Grad erreicht, wodurch wiederum erreicht wird, dass sich der Reibungswert genau auf das Niveau einstellt, das durch den Abstand und die damit einstellbare max. Verschränkung bestimmt wird. Der Reibwert im engeren Sinne, also der Reibwert der Materialpaarung ändert sich nicht, allerdings ändert sich das Reibkraftniveau, welches erfindungsgemäß eingestellt werden kann. Vorzugsweise liegt der Abstand in einem Bereich von 0 bis 20 mm. Die Positionierung dieses beabstandeten (dritten) Anschlagelements verringert die maximale mögliche Schrägstellung der Schenkelfeder, wodurch die Losbrechkraft (Überwindung der Haftreibung) und auch die Verschiebekraft (Gleitreibung) eingestellt werden können. Je größer der Abstand und somit auch die zulässige Schrägstellung, desto kleiner wird die sich einstellende Klemmkraft.

Alternativ oder auch ergänzend dazu kann ein sich in Umfangsrichtung erstreckendes längliches Anschlagselement in Nähe zu einem der beiden Enden der Schenkelfeder angeordnet sein, wobei das längliche Anschlagelement mit einem gegenüber der Querrichtung einstellbaren Neigungswinkel angeordnet ist, so dass bei auftretender Verschiebung dieses Ende der Schenkelfeder sich in einer durch den Neigungswinkel vorgegebenen Schrägstellung an das längliche Anschlagelement anlegt. Hierdurch wird eine schräg gestellte Anlagefläche für ein Ende der Schenkelfeder realisiert, wodurch sich wiederum eine definierte max. Verschränkung sehr genau einstellen lässt. In diesem Zusammenhang ist es von Vorteil, wenn der Neigungswinkel zwischen 0 und 10 Grad liegt. Außerdem ist das längliche Anschlagselement vorzugsweise so ausgebildet, dass es sich gemäß einem vorgebbaren Winkel in Umfangsrichtung erstreckt. Dieser Winkel bestimmt im wesentlichen die Länge bzw. Fläche mit der das Ende der Schenkelfeder im Crashfall anliegt und sollte vorzugsweise zwischen 45 und 120 Grad betragen, kann aber zwischen 0 und 360 Grad liegen)

Es ist auch möglich, die verstellbare Sicherheits-Lenksäule mit zwei oder mehreren solcher Klemmvorrichtungen auszustatten, wobei eine erste Klemmvorrichtung zur Längenfixierung und eine zweite Klemmvorrichtung zur Längen-oder Neigungsfixierung der verstellbaren Lenksäule dient, und wobei jede Klemmvorrichtung eine Schenkelfeder aufweist, bei der zumindest in Nähe zu einem Ende der Schenkelfeder mindestens ein Anschlagelement angeordnet ist, gegen das die Schenkelfeder bei einem Aufprall des Fahrzeuges anschlägt, wodurch die Wicklung der Schenkelfeder eine begrenzbare Schrägstellung einnimmt. Dadurch lässt sich eine mehrfache bzw. mehrstufige Crashfunktion realisieren, die z.B. in Längsrichtung wirkt. Oder es lässt sich eine mehrfache Crashfunktion realisieren, die in Längsrichtung und Neigungsrichtung wirkt.

Auch kann die Lenksäule bzw. das mit der Schenkelfeder beaufschlagte Bauteil eine Aussparung, z.B. in Form eines Längsschlitzes, aufweisen, die bzw. der eine definierte Materialschwächung bewirkt und somit eine Einstellung der vorherrschenden Klemmkraft.

Diese und weitere vorteilhafte Ausgestaltungen der Erfindung ergeben sich auch aus den Unteransprüchen.

Die Erfindung wird nachfolgend anhand von Ausführungsbeispielen und unter Bezugnahme der beiliegenden Zeichnungen im Detail beschrieben, wobei die Zeichnungen folgende schematischen Darstellungen wiedergeben:
- Fig. 1: zeigt in einer Queransicht den Gesamtaufbau einer erfindungsgemäßen Sicherheits-Lenksäule.
- Fig. 2: zeigt im näheren Detail die mittels Schenkelfedern realisierte erfindungsgemäße Klemmvorrichtung mit Sicherheitsfunktion.
- Fig. 3: veranschaulicht anhand einer Schenkelfeder die im Crash-Fall herbeigeführte definierte Verschränkung der Schenkelfeder.
- Fig. 4: zeigt exemplarisch die Anordnung von Anschlagelementen an bzw. in Nähe der Schenkelfeder.
- Fig. 5: zeigt die Anordnung mehrerer Schenkelfedern und mehrerer Anschlagelemente, wobei ein Anschlagelement als ein in Umfangsrichtung sich erstreckendes Element ausgebildet ist.
- Fig. 6: zeigt eine Variante, bei der die Lenksäule mit einem Längsschlitz versehen ist.
- Fig. 7: veranschaulicht in Momentdarstellungen a) und b) die Funktionsweise der Klemmvorrichtung.

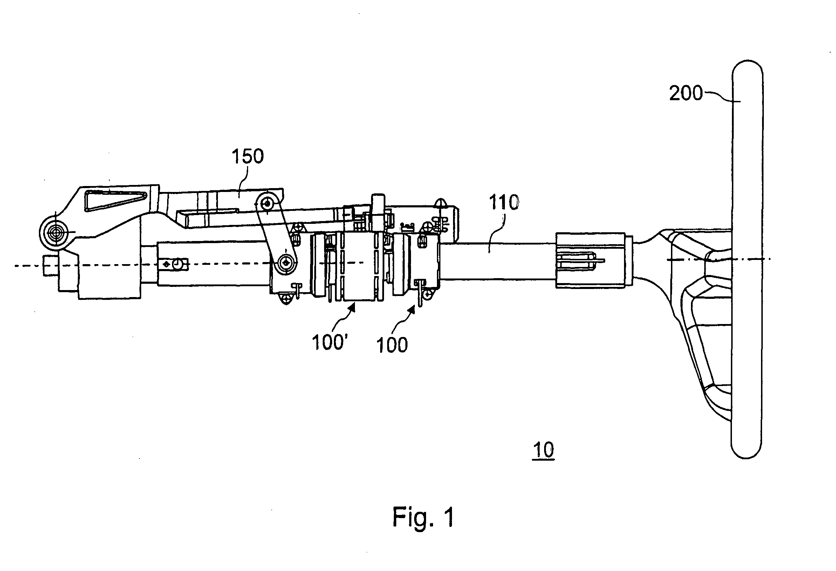

Die Fig. 1 zeigt in Queransicht den Gesamtaufbau einer Sicherheits-Lenksäule 10, die mittels der nachfolgend näher beschriebenen Klemmvorrichtungen 100 und 100' in ihrer Länge wie auch in ihrer Neigung verstellbar ist, wobei zumindest eine der Klemmvorrichtungen auch eine Crash-Sicherheitsfunktion realisiert.

Die dargestellte Sicherheits-Lenksäule 10 weist eine Lenkhandhabe 200 bzw. ein Lenkrad auf, das an einer Lenksäule bzw. einem Hüllrohr 110 für die Lenkspindel montiert ist, welche in die Klemmvorrichtung 100 hineinragt. Die Lenksäule 10 und die daran angeordneten Klemmvorrichtung 100 und 100' sind über einen Hebelmechanismus 150 mit der Karosserie des Fahrzeuges verbunden, wobei der Hebelmechanismus 150 in Zusammenwirkung mit der Klemmvorrichtung 100' eine Verstellmöglichkeit des Neigungswinkels der Lenksäule 110 ermöglicht. Die andere Klemmvorrichtung 100 realisiert eine Verstellmöglichkeit des Hüllrohres 110 und somit der Lenksäule in Längsrichtung bzw. Axialrichtung. An beiden Klemmvorrichtungen, zumindest aber an der Klemmvorrichtung 100, wird auch die nachfolgend näher beschriebene Crash-Sicherungsfunktion realisiert:

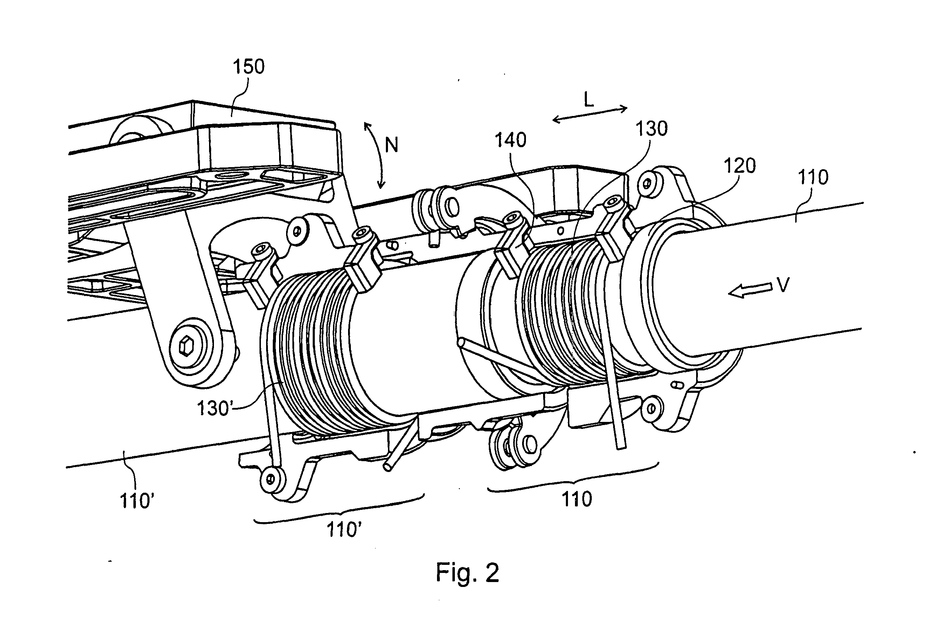

Die Fig. 2 zeigt in einer Detailansicht den Aufbau des Lenksäulenabschnitts, der die Klemmvorrichtung 100 und 100' aufweist. Die nachfolgende Beschreibung nimmt insbesondere Bezug auf die Klemmvorrichtung 100, in welcher das Hüllrohr 110 mit der darin gelagerten Lenkspindel eingeführt ist und welche für die Längsarretierung (Längsverstellung L) der Lenksäule ausgebildet ist. Die andere Klemmvorrichtung 100' realisiert über den Hebelmechanismus 150 die Neigungsarretierung (Neigungswinkel-verstellung N) der Lenksäule.

Beide Klemmvorrichtungen weisen dazu jeweils eine Schenkelfeder 130 bzw. 130' auf, wobei die erste Schenkelfeder 130 eine Verklemmung der Lenksäule bzw. des Hüllrohres 110 zwecks Längeneinstellung bewirkt und wobei die zweite Schenkelfeder 130' eine Verklemmung eines Aufnahmerohrs 110' bewirkt und mittels der drehgelenkigen Verbindung mit dem Hebelmechanismus 150 die Lenksäule in Neigungsrichtung arretiert. Erfindungsgemäß sind die Schenkelfedern 130 und 130' zumindest an einem ihrer Enden mit mindestens einem Anschlagelement versehen, das hier exemplarisch durch das Anschlagelement 140 repräsentiert wird. Die Anschlagelemente können im Normalfall zur Führung der jeweiligen Schenkelfeder dienen, um sicherzustellen, dass sich die Schenkelfeder in der jeweils vorgesehenen optimalen axialen Normalposition befindet. Im besagten Normalfall, d.h. wenn die Lenksäule eingestellt ist, sind beide Federn an ihrer jeweiligen Position verklemmt. Durch die Schenkel- bzw. Schlingfeder 130 wird eine Verklemmung des Hüllrohres 110 und somit eine Arretierung in Längsrichtung realisiert. Zwischen der anderen Schenkel- bzw. Schlingfeder 130' und dem Aufnahmerohr 110' besteht ebenfalls eine Klemmwirkung, die einer Realisierung der Arretierung in Neigungsrichtung darstellt. Das bedeutet, dass im Normalfall beide Schenkelfedern an ihren jeweiligen Positionen eine arretierende Klemmkraft ausüben.

Zur Verstellung der Lenksäule muss lediglich die jeweilige Schenkelfeder geöffnet werden, wobei dies vorzugsweise über einen elektromotorischen Antrieb erfolgen kann. Dabei werden die Schenkelfedern an ihren Enden mit Kräften beaufschlagt, die eine Vergrößerung des jeweiligen Wicklungsdurchmessers bewirken und somit eine Aufweitung der jeweiligen Schenkelfeder. Dies wiederum führt dann zum Auflösung der vorherrschenden Klemmkraft, so dass die Lenksäule 10 sowohl in ihrer Länge L wie auch in ihrer Neigung N verstellt werden kann. Ist die optimale Einstellposition gefunden, wird der elektromotorische Antrieb desaktiviert und somit ziehen sich die Schenkelfedern wieder zusammen und verklemmen an ihren vorgesehen Positionen.

Die Erfindung geht nun von der Erkenntnis aus, dass in einem Crash-Fall in der Lenksäule und insbesondere in dem Hüllrohr bzw. der Lenkspindel eine erhebliche axiale Kraft auftritt, die zu einer einwärts gerichteten Verschiebung V bzw. Verkürzung der Lenksäule führt. Sobald die auftretende CrashKraft, die in der Schenkelfeder 130 vorherrschende Klemmkraft (Haftreibung) überwindet, kommt es zu einem Verrutschen des mit der Lenkspindel verbundenen Hüllrohres 110 relativ zur Klemmvorrichtung 100 und in die Aufnahmehalterung 120 bzw. Aufnahmerohr 110' hinein, was wiederum zu einem gewünschten Nachgeben der Lenksäule führt und damit ein Sicherheitsmerkmal darstellt.

Jedoch haben Überlegungen und Versuche zu der Erkenntnis geführt, dass die üblicherweise zur Arretierung benötigten Klemmkräfte recht hoch sind und ein definiertes sanftes und gleichmäßiges Durchrutschen der Lenksäule behindern würden.

Die Erfindung geht von der Erkenntnis aus, dass mit einer definiert eingestellten Verschränkung der Schenkelfeder 130 im Crash-Fall ein gleichförmiges Verrutschen der Lenkspindel 110 oder sonstiger Lenksäulenbauteile, auf die die Klemmvorrichtung direkt wirkt, erzielt werden kann, so dass insbesondere keine Ruckeleffekte oder andere behindernde Effekte auftreten. Um diese gezielte Verschränkung zu erreichen, wird erfindungsgemäß hier vorgeschlagen, mindestens ein Anschlagelement (siehe 140 in Fig. 2) vorzusehen, an das die Schenkelfeder 130 im Crash-Fall definiert anschlägt und somit sich verschränkt. Vorzugsweise werden noch weitere Anschlagelemente vorgesehen, die im Crash-Fall die Art und den Umfang der Verschränkung (Einleiten der Verschränkung bis hin zu einem definierten Neigungswinkel) bewirken und somit schließlich eine unterhalb der normalen Klemmkraft liegenden Rutschkraft einstellen.

Folglich gibt die Lenksäule im Crash-Fall nach und wird mit einer geringeren Kraft in die Klemmvorrichtung hinein geschoben, so dass der Fahrzeug-Insasse beim Aufprall auf das Lenkrad (siehe Lenk-Handhabe 200 in Fig. 1), auch bei Einsatz eines Airbags, möglichst sanft aufgefangen wird und insbesondere vermieden wird, dass die Lenksäule nicht nachgibt oder ruckelt und dabei in das Fahrzeuginnere eindringen könnte. Durch die Erfindung wird eine kostengünstige Arretierung und Sicherheitsfunktion realisiert.

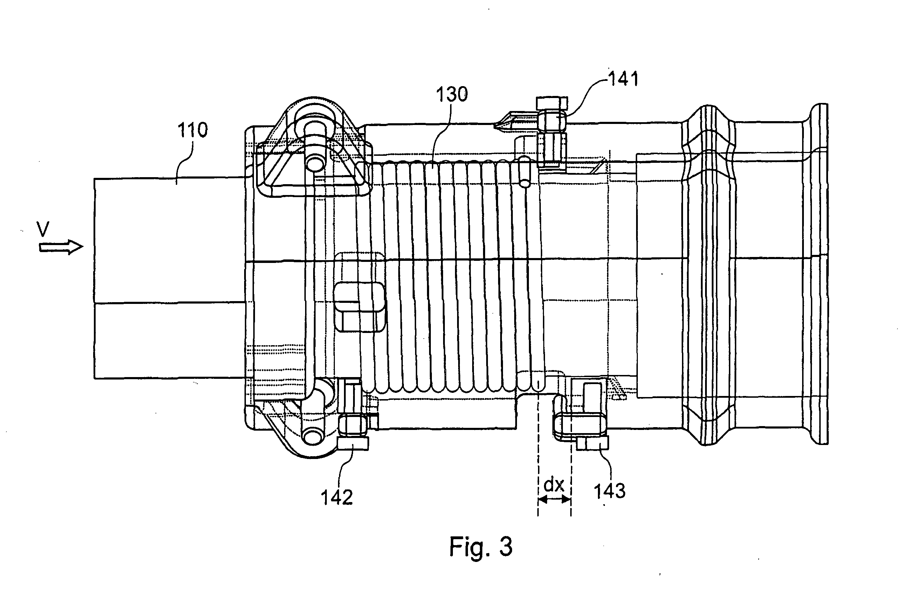

Die Fig. 3 zeigt im näheren Detail eine Schenkelfeder 130, an der mehrere Anschlagelemente 141, 142 und 143 in der Nähe der Enden der Schenkelfeder wie folgt angeordnet sind:

Ein erstes Anschlagelement 141 befindet sich an dem Ende der Schenkelfeder 130, dass zum Aufnahmerohr hin zeigt (hier rechten Seite). Am anderen Ende der Schenkelfeder 130 befindet sich ein zweites Anschlagelement 142, welches dazu in Umfangsrichtung versetzt angeordnet ist. Dieser Versatz zwischen dem ersten Anschlagelement 141 und dem zweiten Anschlagelement 142 kann einige Winkelgrade betragen, sollte aber vorzugsweise etwa 180 Grad betragen. Somit wird im Crash-Fall erreicht, dass beide Anschlagelemente 141 und 142 an ihren jeweiligen Kontaktstellen die Schenkelfeder 130 nach Innen hin verschieben, d.h. stauchen wollen, wobei durch den Versatz der Anschlagelemente sich eine Verschränkung der Schenkelfeder bzw. eine Schrägstellung der Wicklung ergibt.

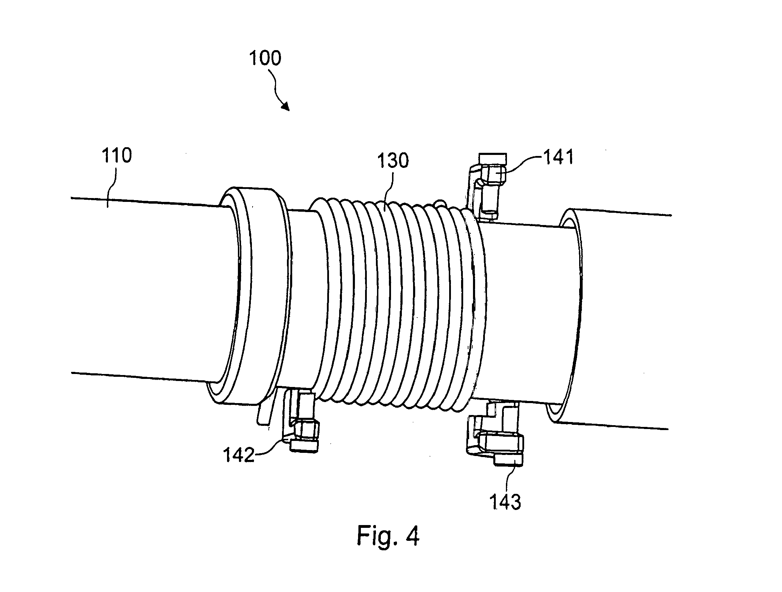

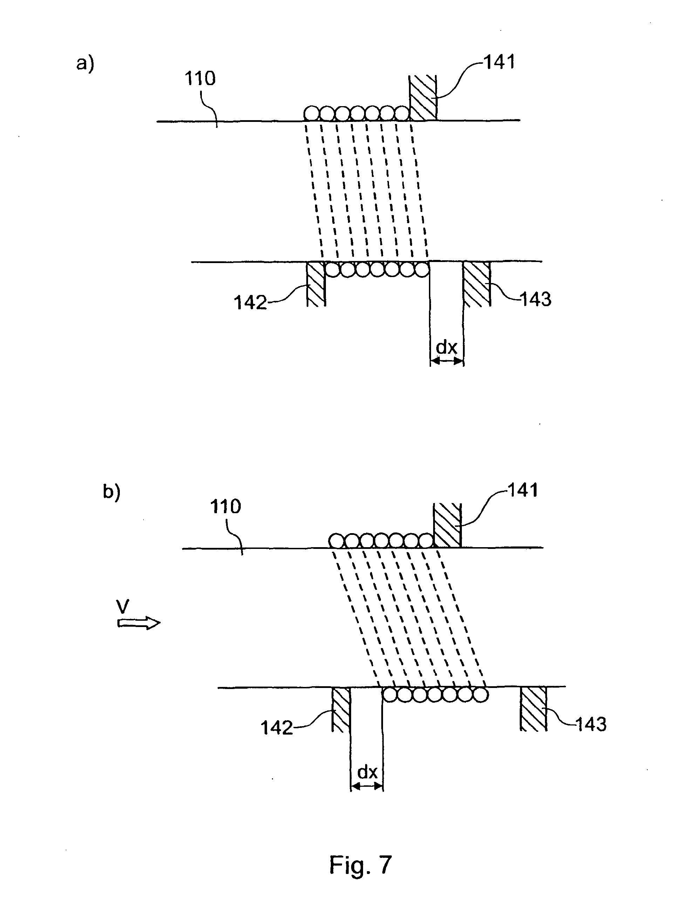

Wie auch die Fig. 7a und 7b veranschaulichen, liegen im Normalfall bei den üblichen Betätigungskräften die Schlingfeder-Stirnseiten (siehe auch Fig. 3 und 4) an den wechselseitigen Anschlägen 141 bzw. 142 an. Durch den axialen Abstand der Anschläge zueinander lässt sich eine gewisse Schrägstellung der Schenkelfeder und somit eine gewisse Vorspannung realisieren (s. Fig. 7a). Im Crashfall, also beim Auftreten einer Crashkraft in Richtung V, wird diese Schrägstellung erhöht, wodurch die Schenkelfeder sich vom Anschlag 142 entfernt, bis sie schließlich am Anschlag 143 zum Anliegen kommt und mit definierter Schrägstellung und somit definiertem Klemmkraftniveau relativ zum Hüllrohr 110 (bzw. Aufnahmerohr 120 in Fig. 2) verschoben werden kann. Bereits diese gezielt herbeigeführte Verschränkung bewirkt eine Reduzierung der Klemmkraft und ermöglicht damit ein sofort eintretendes Verrutschen der Lenkspindel 110 in Richtung V.

Um die Rutschwirkung genau einzustellen, ist ein drittes Anschlagelement 143 vorgesehen, das sich zunächst im Normalzustand im Abstand dX zur Schenkelfeder 130 befindet. Dieser Abstand dX kann z.B. 0-20 mm betragen. Im Crash-Fall führt die sich einstellende Verschränkung der Schenkelfeder 130 dazu, dass bei einer über den Abstand dX hinausgehenden Verschiebung V auch das dritte Anschlagelement 143 mit der einen Seite der Schenkelfeder 130 in Kontakt tritt und dann als Endanschlag wirkt. Durch diesen Endanschlag 143 wird Verschränkung der Schenkelfeder 130 auf einen definierten Neigungswinkel begrenzt bzw. einstellt. Der Neigungswinkel bestimmt sich im wesentlichen durch den Abstand dX. Aufgrund eines derart genau eingestellten Neigungswinkels kann auch die gewünschte Reibwirkung bzw. Rutschwirkung sehr genau eingestellt werden, was wiederum die Realisierung einer optimalen Crash-Sicherheitsfunktion ermöglicht.

Die Fig. 4 zeigt in einer weiteren Ansicht die Schenkelfeder 130 mit den zuvor beschriebenen Anschlagelementen 141, 142 und 143. Wie auch anhand der Fig. 4 zu sehen ist, sind zunächst im Normalzustand nur die Anschlagelemente 141 und 142 in Kontakt mit der Schenkelfeder. Im Crash-Fall jedoch kommt die Schenkelfeder 130 auch mit dem Endanschlag 143 in Berührung, wobei das Anschlagelement 142 sich dann nicht mehr im Eingriff befindet, und erfährt somit eine definierte Begrenzung der Verschränkung.

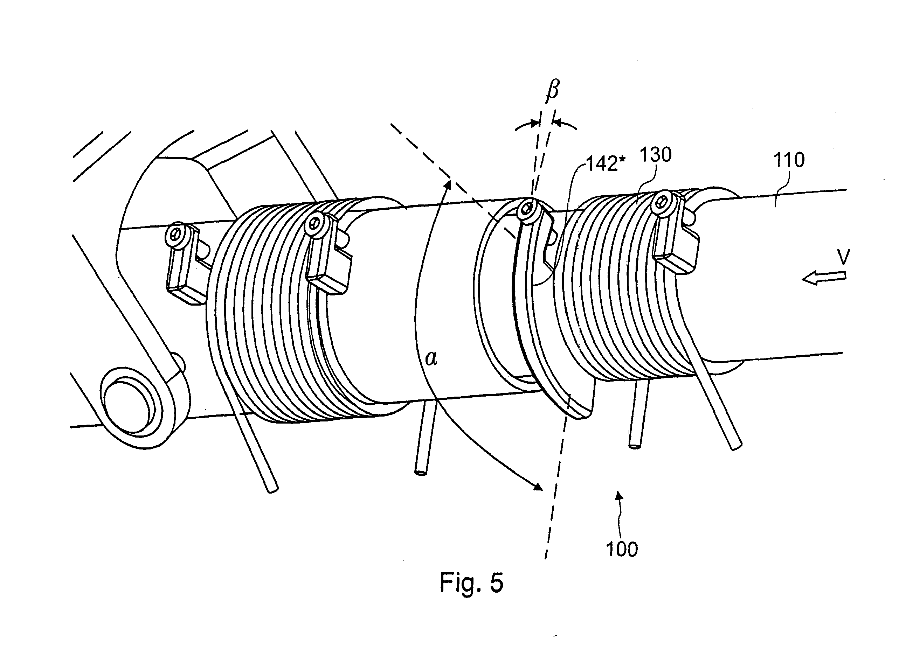

Die Fig. 5 zeigt eine weitere Ausführungsform, bei der eines der Anschlagelemente, nämlich hier das Anschlagelement 142* als ein längliches Anschlagelement ausgeführt ist, das sich in Umfangsrichtung erstreckt. Die Erstreckung bzw. Ausweitung dieses Anschlagselements 142* wird durch einen Umfangswinkel α definiert, der beispielsweise etwa 90° beträgt. Die Größe des Anschlagwinkels α bestimmt also die wirksame Länge des Anschlagselements 142* und bestimmt damit auch die eintretende Klemmkraft. Je größer α ist, desto geringer ist die Klemmkraft. Somit kann also durch die Ausgestaltung des Anschlagelementes 142* auch die gewünschte Größe der Klemmkraft eingestellt werden. Zudem kann das längliche Anschlagelement 142* noch in einem Einstellwinkel β montiert sein, der letztendlich den gewünschten Neigungswinkel für die Verschränkung der Schenkelfeder 130 definiert.

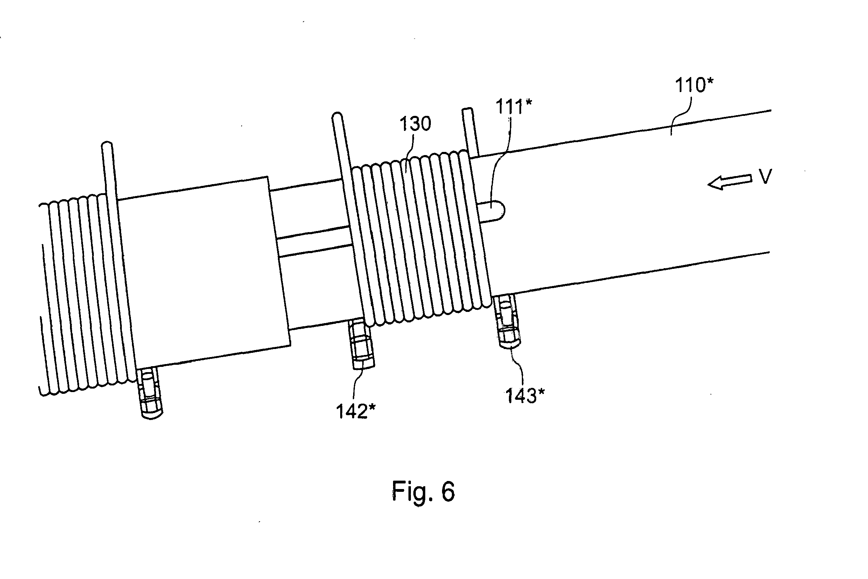

Die Fig. 6 zeigt eine weitere Ausführungsform, bei der die Lenksäule 110* mit einer Aussparung in Form eines Längsschlitzes 111* versehen ist. Auch andere Aussparungen, wie z.B. Löcher, Lochmuster usw. sind denkbar. Die Aussparung (hier der Längsschlitz) wiederum bewirkt eine definierte Schwächung des Hüllrohres und somit Reduzierung der Klemmkraft im Bereich der Schenkelfeder 130. Die Klemmkraft ist auch über die Dimensionierung des Schlitzes 111' einstellbar.

Die bereits zuvor beschriebenen Teilfiguren Fig. 7a und 7b veranschaulichen in Momentdarstellungen die Funktionsweise der Klemmvorrichtung: Bei Normallast kann eine leichte Verschränkung der Schenkelfeder bzw. Vorspannung auftreten, welche bereits durch die Anschläge 141 und 142 im wesentlichen begrenzt wird. Im Crashfall, d.h. bei Überlast, erhöht sich die Verschränkung bzw. Schrägstellung deutlich und wird durch den Endanschlag 143 begrenzt.

Mit der Erfindung wird erreicht, dass im Crash-Fall bei einer auftretenden Stauchung der Lenksäule die damit einhergehende relative Verschiebung der Schenkelfeder durch das mindestens eine Anschlagelement definiert begrenzt wird, so dass die Schenkelfeder bzw. ihre Windungen eine leicht schräge bzw. verschränkte Lage einnehmen und somit die zwischen Schenkelfeder und Lenksäule vorherrschende Klemmkraft definiert verringert wird und damit ein kontrolliertes Verrutschen der Lenksäule relativ zur Schenkelfeder ermöglicht wird. Dadurch wiederum kann die auftretende Crash-Energie definiert abgebaut werden. Somit wird mit einem einzigen Bauteil, nämlich mit einer Schenkelfeder, sowohl die Verklemmung zur Arretierung der Lenksäule ermöglicht wie auch eine effektive Crash-Sicherheitsfunktion realisiert.

Es werden also beide Funktionen, d.h. die Arretierung der Lenksäule wie auch der Abbau von Crash-Kräften, über dasselbe Bauteil, nämlich über die Schenkelfeder realisiert. Die erfindungsgemäße Lösung erfordert demnach weniger Bauelemente, weniger Bauraum als die aus dem Stand der Technik bekannten Lösungen. Vorzugsweise wird die für die Längsverstellung der Lenksäule angeordnete Schenkelfeder mit dem mindestens einen Anschlagelement in ihrer Verschiebbarkeit begrenzt, so dass im Crashfall eine definierte Verschränkung der Schenkelfeder eintritt und somit ein kontrollierter Crash-Kräfteabbau erzielt werden kann.

Es kann auch vorgesehen sein, mehrere Schenkelfedern an der Lenksäule anzuordnen, die im Crash-Fall jeweils an mindestens einem Anschlagelement anschlagen und somit definiert verschränkt werden. Das mindestens eine Anschlagelement dient auch jeweils zur Führung der Schenkelfeder im normalen Betriebszustand, d.h. bei einer normalen Verstellung der Lenksäule.

Als Anschlagelement kann beispielsweise ein Stift bzw. Pin vorgesehen sein. Das Anschlagelement kann auch in Form eines sich in Umfangrichtung teilweise erstreckenden Elementes vorgesehen sein, das vorzugsweise in einem definierten Winkel angeordnet ist, der wiederum den maximalen zulässigen Verschränkungswinkel bzw. Neigungswinkel definiert.

## Patentansprüche

1. Verstellbare Sicherheits-Lenksäule (10) für ein Kraftfahrzeug mit mindestens einer Klemmvorrichtung (100), die zur Längenfixierung der verstellbaren Lenksäule (10) eine Schenkelfeder (130) aufweist, die ein in die Klemmvorrichtung (100) eingeführtes Hüllrohr (110) für eine Lenkspindel an einer durch Lösen der Schenkelfeder (130) verstellbaren Position verklemmt,
**dadurch gekennzeichnet, dass**
zumindest in Nähe zu einem Ende der Schenkelfeder (130) mindestens ein Anschlagelement (141, 142, 143; 142*) angeordnet ist, gegen das die Schenkelfeder (130) bei einer axialen in Einführrichtung auftretenden Verschiebung (V) des Hüllrohres (110) anschlägt, wodurch die Wicklung der Schenkelfeder (130) eine begrenzbare Schrägstellung einnimmt.

2. Verstellbare Sicherheits-Lenksäule (10) nach Anspruch 1 **dadurch gekennzeichnet, dass** an einem Ende der Schenkelfeder (130) ein erstes Anschlagelement (141) angeordnet ist und dass an dem andere Ende der Schenkelfeder (130) ein zweites Anschlagelement (142) angeordnet ist, wobei die Enden gegen jeweils eines der Anschlagelemente (141, 142) anschlagen, sobald die Verschiebung (V) des Hüllrohrs (110) für die Lenkspindel auftritt.

3. Verstellbare Sicherheits-Lenksäule (10) nach Anspruch 2 **dadurch gekennzeichnet, dass** das zweite Anschlagelement (142) in Umfangsrichtung zum ersten Anschlagelement (141) versetzt angeordnet ist.

4. Verstellbare Sicherheits-Lenksäule (10) nach Anspruch 2 oder 3, **dadurch gekennzeichnet, dass** in einem vorgebbaren Abstand (dX) zu einem der beiden Enden der Schenkelfeder (130) ein drittes Anschlagelement (143) angeordnet ist, gegen das dieses Ende der Schenkelfeder (130) anschlägt, wenn die Verschiebung (V) des Hüllrohres (110) den vorgebbaren Abstand (dx) erreicht oder überschreitet.

5. Verstellbare Sicherheits-Lenksäule (10) nach Anspruch 4, **dadurch gekennzeichnet, dass** der Abstand (dX) zwischen 0 und 20 mm liegt.

6. Verstellbare Sicherheits-Lenksäule (10) nach Anspruch 4 oder 5, **dadurch gekennzeichnet, dass** der Abstand (dx) von mindestens einem Federparameter der Schenkelfeder (130) abhängig ist, insbesondere von Windungszahl, Drahtdurchmesser, Werkstoff und/oder Innendurchmesser der Wicklung.

7. Verstellbare Sicherheits-Lenksäule (10) nach einem der vorhergehenden Ansprüche, **dadurch gekennzeichnet, dass** ein sich in Umfangsrichtung erstreckendes längliches Anschlagselement (142*) in Nähe zu einem der beiden Enden der Schenkelfeder (130) angeordnet ist, wobei das längliche Anschlagelement (142) mit einem gegenüber der Querrichtung einstellbaren Neigungswinkel (β) angeordnet ist, so dass bei auftretender Verschiebung (V) des Hüllrohres (110) dieses Ende der Schenkelfeder (130) sich an das längliche Anschlagelement (142*) anlegt.

8. Verstellbare Sicherheits-Lenksäule (10) nach Anspruch 7, **dadurch gekennzeichnet, dass** der Neigungswinkel (β) zwischen 0 und 10 Grad liegt.

9. Verstellbare Sicherheits-Lenksäule (10) nach Anspruch 7 oder 8, **dadurch gekennzeichnet, dass** das längliche Anschlagselement (142*) sich gemäß einem vorgebbaren Winkel (α) in Umfangsrichtung erstreckt.

10. Verstellbare Sicherheits-Lenksäule (10) nach einem der Ansprüche 7 bis 9, **dadurch gekennzeichnet, dass** die Schenkelfeder (130) bei auftretender Verschiebung (V) des Hüllrohres (110) eine Schrägstellung einnimmt, die abhängig von dem Neigungswinkel (β) und/oder dem Winkel (α) in Umfangsrichtung ist.

11. Verstellbare Sicherheits-Lenksäule (10) nach einem der Ansprüche 4 bis 6, **dadurch gekennzeichnet, dass** das erste und zweite Anschlagelement (141, 142) eine Lagefixierung der Schenkelfeder (130) bewirken und dass das dritte Anschlagelement (143), insbesondere durch seine beabstandete Position, die bei der Verschiebung (V) des Hüllrohres (110) und Schrägstellung der Wicklung der Schenkelfeder (130) sich ergebende Klemmkraft bestimmt.

12. Verstellbare Sicherheits-Lenksäule (10) nach einem der Ansprüche 7 bis 10, **dadurch gekennzeichnet, dass** das längliche Anschlagelement (142*), insbesondere durch seine Position und/oder Formgebung, die bei der Verschiebung (V) des Hüllrohres (110) und Schrägstellung der Wicklung der Schenkelfeder (130) sich ergebende Klemmkraft bestimmt.

13. Verstellbare Sicherheits-Lenksäule (10) nach einem der vorhergehenden Ansprüche, **dadurch gekennzeichnet, dass** die Lenksäule (10) eine erste Klemmvorrichtung (100) zur Längenfixierung und eine zweite Klemmvorrichtung (100') zur Längen- / oder Neigungsfixierung der verstellbaren Lenksäule (10) aufweist, wobei jede Klemmvorrichtung eine Schenkelfeder (130) aufweist, bei der zumindest in Nähe zu einem Ende der Schenkelfeder (130) mindestens ein Anschlagelement (141, 142, 143; 142*) angeordnet ist, gegen das die Schenkelfeder (130) bei einer axialen in Einführrichtung auftretenden Verschiebung (V) des Hüllrohres (110) anschlägt, wodurch die Wicklung der Schenkelfeder (130) eine begrenzbare Schrägstellung einnimmt.

14. Verstellbare Sicherheits-Lenksäule (10) nach einem der vorhergehenden Ansprüche, **dadurch gekennzeichnet, dass** die in die Klemmvorrichtung (100) eingeführte Lenkspindel (110*) mindestens eine Aussparung, insbesondere einen Längschlitz (111') oder Lochmuster in Längs - und/oder Radialrichtung, aufweist.

15. Klemmvorrichtung (100) für eine verstellbare Sicherheits-Lenksäule (10) für ein Kraftfahrzeug, wobei die Klemmvorrichtung zur Längen- oder Neigungsfixierung der verstellbaren Lenksäule (10) eine Schenkelfeder (130) aufweist, die ein in die Klemmvorrichtung (100) eingeführtes Hüllrohr (110) für eine Lenkspindel an einer durch Lösen der Schenkelfeder (130) verstellbaren Position verklemmt,
**dadurch gekennzeichnet, dass**
zumindest in Nähe zu einem Ende der Schenkelfeder (130) mindestens ein Anschlagelement (141, 142, 143; 142*) angeordnet ist, gegen das die Schenkelfeder (130) bei einer axialen in Einführrichtung auftretenden Verschiebung (V) des Hüllrohres (110) anschlägt, wodurch die Wicklung der Schenkelfeder (130) eine begrenzbare Schrägstellung einnimmt.

## Claims

1. An adjustable safety steering column (10) for a motor vehicle, comprising at least one clamping device (100) which, for the purpose of fixing the length of the adjustable steering column (10), has a torsion spring (130) which clamps a casing tube (110) for a steering shaft at a position that can be adjusted by releasing the torsion spring (130), the casing tube being inserted in the clamping device (100), **characterized in that** at least in the vicinity of one end of the torsion spring (130), at least one stop element (141, 142, 143; 142*) is arranged, against which the torsion spring (130) strikes during an axial displacement (V) of the casing tube (110) occurring in the insertion direction, whereby the coil of the torsion spring (130) assumes an oblique position, which can be limited.

2. The adjustable safety steering column (10) according to claim 1, **characterized in that** a first stop element (141) is arranged at one end of the torsion spring (130), and a second stop element (142) is arranged at the other end of the torsion spring (130), wherein the ends strike against one of the stop elements (141, 142) respectively, as soon as the displacement (V) of the casing tube (110) for the steering shaft occurs.

3. The adjustable safety steering column (10) according to claim 2, **characterized in that** the second stop element (142) is arranged offset from the first stop element (141) in the circumferential direction.

4. The adjustable safety steering column (10) according to claim 2 or 3, **characterized in that** a third stop element (143) is arranged at a predeterminable distance (dX) from one of the two ends of the torsion spring (130), this end of the torsion spring (130) striking against this stop element when the displacement (V) of the casing tube (110) reaches or exceeds the predeterminable distance (dX).

5. The adjustable safety steering column (10) according to claim 4, **characterized in that** the distance (dX) ranges between 0 and 20 mm.

6. The adjustable safety steering column (10) according to claim 4 or 5, **characterized in that** the distance (dX) is dependent on at least one spring parameter of the torsion spring (130), and more particularly on the number of windings, wire diameter, material and/or inside diameter of the coil.

7. The adjustable safety steering column (10) according to any one of the preceding claims, **characterized in that** an elongate stop element (142*) extending in the circumferential direction is arranged in the vicinity of one of the two ends of the torsion spring (130), wherein the elongate stop element (142) is arranged at an angle of inclination (p) which can be adjusted relative to the transverse direction such that, when displacement (V) of the casing tube (110) occurs, this end of the torsion spring (130) is seated against the elongate stop element (142*).

8. The adjustable safety steering column (10) according to claim 7, **characterized in that** the angle of inclination (β) ranges between 0 and 10 degrees.

9. The adjustable safety steering column (10) according to claim 7 or 8, **characterized in that** the elongate stop element (142*) extends in the circumferential direction in accordance with a predeterminable angle (α).

10. The adjustable safety steering column (10) according to any one of claims 7 to 9, **characterized in that**, when displacement (V) of the casing tube (110) occurs, the torsion spring (130) assumes an oblique position which is dependent on the angle of inclination (p) and/or the angle (α) in the circumferential direction.

11. The adjustable safety steering column (10) according to any one of claims 4 to 6, **characterized in that** the first and second stop elements (141, 142) cause a positional fixation of the torsion spring (130) and the third stop element (143), in particular due to the spaced position thereof, defines the clamping force that develops during the displacement (V) of the casing tube (110) and oblique positioning of the coil of the torsion spring (130).

12. The adjustable safety steering column (10) according to any one of claims 7 to 10, **characterized in that** the elongate stop element (142*), in particular due to the position thereof and/or shaping thereof, defines the clamping force that develops during the displacement (V) of the casing tube (110) and oblique positioning of the coil of the torsion spring (130).

13. The adjustable safety steering column (10) according to any one of the preceding claims, **characterized in that** the steering column (10) comprises a first clamping device (100) for fixing the length and a second clamping device (100') for fixing the length or inclination of the adjustable steering column (10), wherein each clamping device comprises a torsion spring (130), in which at least one stop element (141, 142, 143; 142*) is arranged at least in the vicinity of one end of the torsion spring (130), the torsion spring (130) striking against this stop element during an axial displacement (V) of the casing tube (110) occurring in the insertion direction, whereby the coil of the torsion spring (130) assumes an oblique position, which can be limited.

14. The adjustable safety steering column (10) according to any one of the preceding claims, **characterized in that** the steering shaft (110*) inserted in the clamping device (100) comprises at least one opening, and more particularly a longitudinal slot (111') or hole pattern, in the longitudinal and/or radial directions.

15. A clamping device (100) for an adjustable safety steering column (10) for a motor vehicle, wherein the clamping device comprises a torsion spring (130) for fixing the length or inclination of the adjustable steering column (10), the torsion spring clamping a casing tube (110) for a steering shaft at a position that can be adjusted by releasing the torsion spring (130), the casing tube being inserted in the clamping device (100),
**characterized in that**
at least in the vicinity of one end of the torsion spring (130), at least one stop element (141, 142, 143; 142*) is arranged, against which the torsion spring (130) strikes during an axial displacement (V) of the casing tube (110) occurring in the insertion direction, whereby the coil of the torsion spring (130) assumes an oblique position, which can be limited.

## Revendications

1. Unie colonne de direction de sécurité réglable (10) pour un véhicule à moteur, comprenant au moins un dispositif de serrage (100) qui, aux fins de la fixation de la longueur de la colonne de direction réglable (10), dispose d'un ressort de torsion (130) qui serre un tube enveloppe (110) pour un arbre de direction à une position qui peut être ajustée en relâchant le ressort de torsion (130), le tube enveloppe étant inséré dans le dispositif de serrage (100), **caractérisée en ce qu'**est disposé au moins un élément de butée (141 ,142, 143, 142*) au moins au voisinage d'une extrémité du ressort de torsion (130), contre lequel le ressort de torsion (130) se heurte lors d'un déplacement axial (V) du tube enveloppe (110) se produisant suivant la direction d'insertion, grâce à quoi l'enroulement du ressort de torsion (130) prend une position oblique pouvant être limitée.

2. La colonne de direction de sécurité réglable (10) selon la revendication 1, **caractérisée en ce qu'**un premier élément de butée (141) est disposé à une extrémité du ressort de torsion (130), et un second élément de butée (142) est disposé à l'autre extrémité du ressort de torsion (130), dans lequel les extrémités se heurtent contre l'un des éléments de butée ( 141 , 142 ) respectivement, dès que se produit le déplacement (V) du tube enveloppe (110) de l'arbre de direction.

3. La colonne de direction de sécurité réglable (10) selon la revendication 2, **caractérisée en ce que** le second élément de butée (142) est disposé en décalage par rapport au premier élément de butée (141) suivant une direction circonférentielle.

4. La colonne de direction de sécurité réglable (10) selon la revendication 2 ou 3, **caractérisée en ce qu'**un troisième élément de butée (143) est disposé à une distance prédéterminée (dX) de l'une des deux extrémités du ressort de torsion (130), cette extrémité du ressort de torsion (130) se heurtant contre cet élément de butée lorsque le déplacement (V) du tube enveloppe (110) atteint ou dépasse la distance prédéterminée (dX).

5. La colonne de direction de sécurité réglable (10) selon la revendication 4, **caractérisée en ce que** la distance (dx) est comprise entre 0 et 20 mm .

6. La colonne de direction de sécurité réglable (10) selon la revendication 4 ou 5, **caractérisée en ce que** la distance (dx) est dépendante d'au moins un paramètre de ressort du ressort de torsion (130), et plus particulièrement du nombre de spires, du diamètre de l'enroulement, du matériau et/ou du diamètre interne du ressort.

7. La colonne de direction de sécurité réglable (10) selon l'une quelconque des revendications précédentes, caractérisée en ce q'un élément de butée allongé (142*) s'étendant suivant une direction circonférentielle est disposé au voisinage de l'une des deux extrémités du ressort de torsion (130), dans lequel l'élément de butée allongé (142) est disposé suivant un angle d'inclinaison (β) qui peut être ajusté par rapport à la direction transversale de telle sorte que, lors d'un déplacement (V) du tube enveloppe (110) se produit, cette extrémité du ressort de torsion (130) est en appui contre l'élément de butée allongé (142*).

8. La colonne de direction de sécurité réglable (10) selon la revendication 7, **caractérisée en ce que** l'angle d'inclinaison (β) est compris entre 0 et 10 degrés.

9. La colonne de direction de sécurité réglable (10) selon la revendication 7 ou 8, **caractérisée en ce que** l'élément de butée allongé (142*') s'étend suivant la direction circonférentielle suivant un angle prédéterminé (β).

10. La colonne réglable de direction de sécurité (10) selon l'une quelconque des revendications 7 à 9, **caractérisée en ce que**, lors d'un déplacement (V) du tube d'enveloppe (110), le ressort de torsion (130) prend une position oblique qui est fonction de l'angle d'inclinaison (β) et/ou l'angle (α) suivant la direction circonférentielle.

11. La colonne de direction de sécurité réglable (10) selon l'une quelconque des revendications 4 à 6, **caractérisée en ce que** les premier et second éléments de butée (141, 142) provoquent une fixation en position du ressort de torsion (130) et le troisième élément de butée (143), en particulier en raison de la position espacée de celui-ci, définit la force de serrage développée au cours du déplacement (V) du tube enveloppe (110) et le positionnement oblique du bobinage du ressort de torsion ( 130).

12. La colonne de direction de sécurité réglable (10) selon l'une quelconque des revendications 7 à 10, **caractérisée en ce que** l'élément de butée allongé (142*), en particulier en raison de sa position et/ou de sa forme, définit la force de serrage qui se développe durant le déplacement (V) du tube enveloppe (110) et le positionnement oblique du bobinage du ressort de torsion (130).

13. La colonne de direction de sécurité réglable (10) selon l'une quelconque des revendications précédentes, **caractérisée en ce que** la colonne de direction (10) comprend un premier dispositif de serrage (100) pour fixer la longueur et un second dispositif de serrage (100') pour fixer le longueur ou l'inclinaison de la colonne de direction réglable (10), dans lequel chaque dispositif de serrage comprend un ressort de torsion (130), dans lequel au moins un élément de butée (141, 142, 143 ; 142*) est disposé dans le voisinage de l'une des extrémités du ressort de torsion (130), le ressort de torsion (130) se heurtant contre cet élément de butée lors d'un déplacement axial (V) du tube enveloppe (110) suivant la direction d'insertion, grâce auquel le bobinage du ressort de torsion (130) adopte une position oblique pouvant être limitée.

14. La colonne de direction de sécurité réglable (10) selon l'une quelconque des revendications précédentes, **caractérisée en ce que** l'arbre de direction (110*) inséré dans le dispositif de serrage (100) comprend au moins une ouverture, et plus particulièrement une fente longitudinale (111') ou un ensemble de trous, suivant des directions longitudinales et / ou radiales.

15. Un dispositif de serrage (100) pour une colonne de direction de sécurité réglable (10) pour un véhicule automobile, dans lequel le dispositif de serrage comprend un ressort de torsion (130) pour fixer la longueur ou l'inclinaison de la colonne de direction réglable (10), le ressort de torsion provoquant le serrage du tube enveloppe (110) pour un arbre de direction à une position pouvant être ajustée par relâchement du ressort de torsion (130), le tube enveloppe étant inséré dans le dispositif de serrage (100), **caractérisé en ce qu'**au moins un élément de butée (141, 142, 143 ; 142*) est disposé au moins dans le voisinage d'une extrémité du ressort de torsion (130), contre lequel le ressort de torsion (130) se heurte lors d'un déplacement axial (V) du tube enveloppe (110) suivant la direction d'insertion, grâce à quoi le bobinage du ressort de torsion (130) prend une position oblique pouvant être limité.
